# EUROPEAN PATENT SPECIFICATION

(11) **EP 3 299 420 B1**
(45) Date of publication and mention of the grant of the patent: **25.03.2026**
(21) Application number: 16799895.4
(22) Date of filing: 18.05.2016
(51) Int. Cl.: C08L 83/04, C08K 3/28, C08K 5/5415, C08K 7/16, C09K 5/14

(54) **THERMALLY CONDUCTIVE COMPOSITION**
WÄRMELEITFÄHIGE ZUSAMMENSETZUNG
COMPOSITION THERMOCONDUCTRICE

(30) Priority: 22.05.2015 JP 2015104113
(43) Date of publication of application: 28.03.2018
(73) Proprietor: Momentive Performance Materials Japan LLC, Tokyo 107-6119 (JP)
(72) Inventor: HIRAKAWA, Daigo, Tokyo 107-6119 (JP); TAKANASHI, Masanori, Tokyo 107-6119 (JP)
(74) Representative: Gille Hrabal Partnerschaftsgesellschaft mbB Patentanwälte
(86) International application number: PCT/JP2016/064725
(87) International publication number: WO 2016/190189

(56) References cited:
- EP-A1- 0 382 188
- EP-B1- 1 797 155
- JP-A- 2001 158 610
- JP-A- 2001 158 610
- JP-A- 2002 164 481
- JP-A- 2002 299 533
- JP-A- 2002 299 533
- JP-A- 2010 155 870
- JP-A- 2014 208 728
- JP-A- 2014 208 728
- JP-A- H11 145 351

## Description

### Field of the Invention

The present invention relates to a thermally conductive composition capable of being used as a heat dissipating material, and a heat dissipating material using the thermally conductive composition.

### Background of the Invention

Electronic devices are undergoing increasingly higher integration and higher speed-up year by year, and accordingly the demand for heat dissipating materials as the countermeasures coping with the generated heat has been enhanced.

JP-A 62-43493 describes an invention of a thermally conductive silicone grease having a good thermal conductivity and a good electrical insulation. The document describes use of a boron nitride having a particle size of 0.01 to 100 µm as a component imparting the thermal conductivity (p.2, in the lower section of the right column), and a boron nitride having a particle size of 1 to 5 µm is used in the Example.

JP-A 2003-176414 describes an invention of a thermally conductive silicone composition, and describes as a component imparting the thermal conductivity, (B) a low-melting-point metal powder having an average particle size of 0.1 to 100 µm, and preferably 20 to 50 µm (paragraph 0011), and (D) a filler (paragraph 0014).

JP-A 2003-218296 describes an invention of a silicone resin composition including a silicone resin and a thermally conductive filler, and describes as the thermally conductive filler, for example, a low-melting-point metal powder, and an aluminum powder, a zinc oxide powder, and an alumina powder each having an average particle size of 0.1 to 100 µm, and preferably 20 to 50 µm (paragraphs 0017 to 0021).

JP-A 2003-301189 describes an invention of a heat dissipating silicone grease composition, and describes the use of a thermally conductive filler having an average particle size falling within a range of 0.1 to 100 µm, and preferably 1 to 20 µm (paragraphs 0012 and 0013).

JP-A 2005-112961 describes an invention of a curable organopolysiloxane composition, and describes the use of a thermally conductive filler having an average particle size of 0.1 to 100 µm, and preferably 1 to 20 µm (paragraphs 0030 to 0032)
JP-A 2007-99821 describes an invention of a thermally conductive silicone grease composition, and describes the use of powders having an average particle size of 0.1 to 10 µm, and preferably 0.2 to 8 µm, as a metal oxide powder or a metal nitride powder of component (B) in order to obtain a desired thermal conductivity (paragraphs 0016 and 0017).

JP-A 2008-184549 describes an invention of a method for producing a heat dissipating material. The invention uses as (D) a thermally conductive filler, a thermally conductive filler having an average particle size of 100 µm or less, and preferably 0.1 to 80 µm (paragraphs 0027 and 0028). In Example 1, an aluminum oxide (D-1) having an average particle size of 14 µm, an aluminum oxide (D-2) having an average particle size of 2 µm, and a zinc oxide (D-3) having an average particle size of 0.5 µm are used in combination.

JP-A 2009-96961 describes an invention of a thermally conductive silicone grease composition, and describes the use of (B-1) a thermally conductive filler having an average particle size of 12 to 100 µm (preferably 15 to 30 µm), and (B-2) a thermally conductive filler having an average particle size of 0.1 to 10 µm (preferably 0.3 to 5 µm) (claims, and paragraphs 0028 to 0030).

JP-A 2010-13563 describes an invention of a thermally conductive silicone grease, and states that (A) a thermally conductive inorganic filler preferably has an average particle size falling within a range of 0.1 to 100 µm, in particular, 1 to 70 µm (paragraph 0025). In Examples, there are used B-1: a zinc oxide powder (amorphous, average particle size: 1.0 µm), B-2: an alumina powder (spherical, average particle size: 2.0 µm), and B-3: an aluminum powder (amorphous, average particle size: 7.0 µm).

JP-A 2010-126568 describes an invention of a silicone grease composition for heat dissipation, and states that (B) a thermally conductive inorganic filler is required to have an average particle size falling within a range of 0.1 to 100 µm, and preferably has an average particle size falling within a range of 0.5 to 50 µm.

In Examples, there are used an alumina powder C-1: (average particle size: 10 µm, specific surface area: 1.5 m²/g), an alumina powder C-2: (average particle size: 1 µm, specific surface area: 8 m²/g), a zinc oxide powder C-3: (average particle size: 0.3 µm, specific surface area: 4 m²/g), an aluminum powder C-4: (average particle size: 10 µm, specific surface area: 3 m²/g), and an alumina powder C-5: (average particle size: 0.01 µm, specific surface area: 160 m²/g).

JP-A 2011-122000 describes an invention of a silicone composition for a highly thermally conductive potting material, and describes the use of a thermally conductive filler having an average particle size of 1 to 100 µm, preferably 5 to 50 µm as (A) a thermally conductive filler (paragraph 0018). It is stated that when an alumina powder is used as (A) the thermally conductive filler, (B1) a spherical alumina having an average particle size of more than 5 µm to 50 µm or less, and (B2) a spherical or amorphous alumina having an average particle size of 0.1 µm to 5 µm are preferably used in combination (paragraph 0018).

JP-A 2013-147600 describes an invention of a thermally conductive silicone composition. It is stated that a thermally conductive filler being component (B) mainly includes alumina, and is composed of (C-i) an amorphous alumina having an average particle size of 10 to 30 µm, (C-ii) a spherical alumina having an average particle size of 30 to 85 µm, and (C-iii) an insulating inorganic filler having an average particle size of 0.1 to 6 µm (paragraph 0032). A combination of an amorphous alumina and a spherical alumina allows a specific effect to be obtained.
JP 2014 208728 A discloses a heat storage silicone material intended to have a high heat storage property and high thermal conductivity, which contains (A) a base polymer component that is a linear organopolysiloxane containing two or more alkenyl groups on average in the molecule which are bonded to the silicon atoms of both terminals of the molecular chain; (B) a crosslinking component that is an organohydrogenpolysiloxane containing two or more hydrogen atoms on average in the molecule each bonded to a silicon atom; (C) a platinum-group-metal catalyst; (D) thermally conductive particles; and (E) heat-storage material particles that are microcapsules of a heat-storage substance having a melting point of 0°C-100°C. Therein, the thermally conductive particles include inorganic particles having an average particle diameter of 2 µm or larger and inorganic particles having an average particle diameter smaller than 2 µm, and the inorganic particles having an average particle diameter of 2 µm or larger account for 50 wt-% or more when all particles are taken as 100 wt-%. Further, examples of the thermally conductive particles indicated in this document include aluminium nitride, boron nitride, and alumina.

### Summary of the Invention

An object of the present invention is to provide a thermally conductive composition having a good thermal conductivity and being capable of being made to have a low viscosity, and a heat dissipating material using the thermally conductive composition.

The present invention provides a thermally conductive composition including (A) a spherical thermally conductive filler and (B) an alkoxysilane compound represented by the general formula (II-1) or the general formula (II-2) 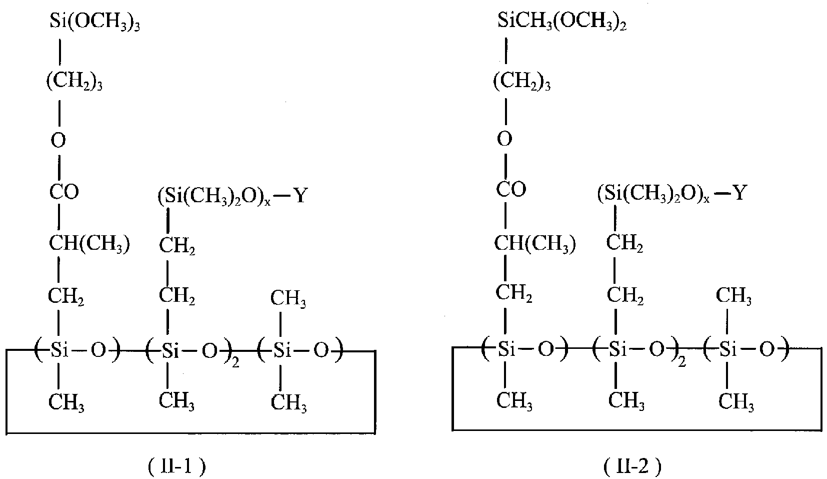 wherein
x = 10 to 500, and
Y = Si(CH₃)₂CH=CH₂ or Si(CH₃)₃,
wherein the spherical thermally conductive filler of component (A) is a mixture formulated with specific ratios of fillers having different average particle sizes, the mixture being formulated with a spherical thermally conductive filler made of a nitride and having an average particle size of 50 µm to 80 µm in an amount of 50 to 70% by mass; and being formulated with a spherical thermally conductive filler having an average particle size of less than 1 µm in an amount of 10% to 30% by mass, and being formulated with a spherical thermally conductive filler having an average particle size of 1 µm or more and less than 50 µm as a balance, wherein the average particle sizes are the median diameters d₅₀ as measured by the Coulter counter method.

The present invention further provides a heat dissipating material using the composition.

The composition of the present invention has a high thermal conductivity, but is capable of being made to have a low viscosity, and accordingly is easy to apply to an application object when the composition is used as a heat dissipating material.

### Description of Embodiments

### <Thermally Conductive Composition>

The thermally conductive composition of the present invention includes (A) a spherical thermally conductive filler and (B) an alkoxysilane compound.

### [Component (A)]

Component (A) is a spherical thermally conductive filler, and does not include any amorphous thermally conductive filler. The spherical shape is not required to be a perfect sphere, but when a major axis and a minor axis are involved, the spherical shape means a shape approximately satisfying the ratio of major axis/minor axis = 1.0 ± 0.2.

The spherical thermally conductive filler of component (A) is a mixture formulated with specific ratios of fillers having different average particle sizes, and from the viewpoint of being capable of enhancing the thermal conductivity, the mixture is formulated with a filler having an average particle size of 50 µm to 80 µm in an amount of 50 to 70% by mass.

The spherical thermally conductive filler of component (A) is a mixture formulated with specific ratios of fillers having different average particle sizes, namely, a spherical thermally conductive filler having an average particle size of 50 µm to 80 µm and a spherical thermally conductive filler having an average particle size of less than 1 µm, and a spherical thermally conductive filler having an average particle size of 1 µm or more and less than 50 µm as a balance.

In the mixture of component (A), the spherical thermally conductive filler having an average particle size of 50 µm to 80 µm is formulated in an amount of 50 to 70% by mass from the viewpoint of being capable of enhancing the thermal conductivity. In one example, the mixture of component (A) is formulated with a spherical thermally conductive filler having an average particle size of 50 to 80 µm in an amount of 50 to 70% by mass, and preferably 50 to 60% by mass.

From the viewpoint of suppressing the increase of the viscosity and enhancing the thermal conductivity, in the mixture of component (A), the spherical thermally conductive filler having an average particle size of less than 1 µm is formulated in an amount of 10% to 30% by mass, and preferably 15% by mass to 30% by mass. In one example, in the mixture of component (A), the spherical thermally conductive filler having an average particle size of less than 1 µm is preferably formulated in an amount of 15 to 25% by mass.

The mixture of component (A) is formulated with, as a balance excluding the spherical thermally conductive filler having an average particle size of 50 µm or more and the spherical thermally conductive filler having an average particle size of less than 1 µm, a spherical thermally conductive filler having an average particle size of 1 µm or more and less than 50 µm, preferably an average particle size of 1 to 10 µm, and more preferably an average particle size of 1 to 5 µm.

In the mixture of component (A), the spherical thermally conductive filler having an average particle size of 50 µm to 80 µm is made of a nitride, and the nitride is preferably aluminum nitride or boron nitride, from the viewpoint of thermal conductivity. As the spherical thermally conductive filler made of a nitride and having an average particle size of 50 µm to 80 µm, a roundish aluminum nitride "FAN-f50-J (average particle size: 50 µm)" and a ditto "FAN-f80 (average particle size: 80 µm)" sold by Tokuyama Corporation can be used.

The spherical thermally conductive filler having an average particle size of 1 µm or more and less than 50 µm, preferably an average particle size of 1 to 10 µm, and more preferably an average particle size of 1 to 5 µm is preferably a spherical thermally conductive filler made of a nitride, and as such a spherical thermally conductive filler, for example, a roundish aluminum nitride "HF-01(average particle size: 1 µm)" and a ditto "HF-05 (average particle size: 5 µm)" sold by Tokuyama Corporation can be used. However, other spherical metal oxide powders and metal powders can also be used such as those selected from aluminum oxide, zinc oxide, and aluminum.

As the spherical thermally conductive filler having an average particle size of less than 1 µm, there can be used a filler selected from metal oxides such as aluminum oxide (Al₂O₃) and zinc oxide (ZnO), nitrides such as aluminum nitride and boron nitride, metals such as aluminum, copper, silver, and gold, and metal/metal oxide core-shell-type particles.

### [Component (B)]

The alkoxysilane compound of component (B) is a compound represented by the following general formula (II-1) or the compound represented by the following general formula (II-2) : 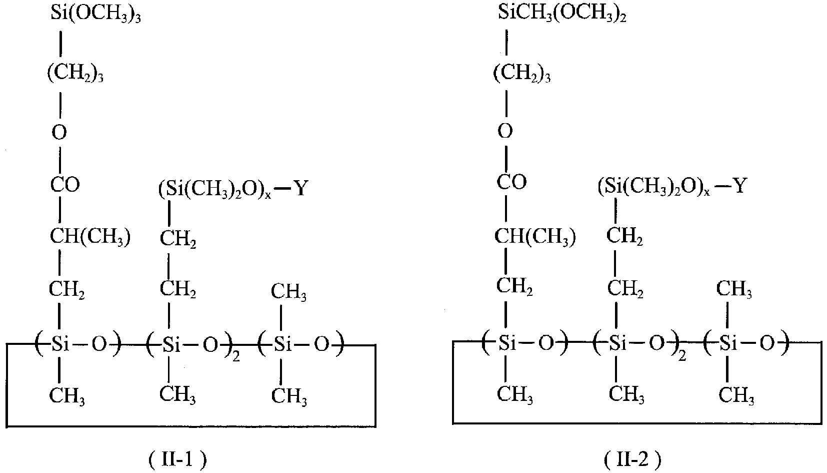 wherein
x = 10 to 500, and
Y = Si(CH₃)₂CH = CH₂ or Si(CH₃)₃.

In an embodiment, the content of component (B) in the composition is 1 to 20 parts by mass, preferably 1 to 15 parts by mass, and more preferably 3 to 15 parts by mass, relative to 100 parts by mass of component (A).

### [Other Components]

The composition can further include polyorganosiloxane as component (C), in addition to component (A) and component (B). In the polyorganosiloxane of component (C), the dimethylpolysiloxane of component (B) is not included.

### [Component (C)]

As the polyorganosiloxane of component (C), a polyorganosiloxane represented by the following average compositional formula (I) can be used:

R¹ₐR²_{b}SiO_{[4-(a+b)]/2} (I)

In the formula, R¹ is an alkenyl group. The alkenyl group is preferably an alkenyl group having carbon atoms within a range of 2 to 8; examples of such an alkenyl group may include a vinyl group, an allyl group, a propenyl group, a 1-butenyl group, and a 1-hexenyl group; the alkenyl group is preferably a vinyl group. When the alkenyl group is included, preferably one or more alkenyl groups are included in one molecule, and preferably two or more alkenyl groups are included in one molecule. When one or more alkenyl groups are included in one molecule, component (C) can be regulated between a gel state and a rubber state. The alkenyl groups may be bonded either to silicon atoms at molecular chain terminals or to silicon atoms midway the molecular chain, or alternatively may be bonded to both of the above.

R² is a substituted or unsubstituted monovalent hydrocarbon group free from any aliphatic unsaturated bond. The substituted or unsubstituted monovalent hydrocarbon group free from aliphatic unsaturated bond is a group having 1 to 12 carbon atoms, and preferably 1 to 10 carbon atoms; examples of such a substituted or unsubstituted monovalent hydrocarbon group include: alkyl groups such as a methyl group, an ethyl group, a propyl group, an isopropyl group, a butyl group, a hexyl group, an octyl group, a decyl group, and a dodecyl group; cycloalkyl groups such as a cyclopentyl group, a cyclohexyl group, and a cyclobutyl group; aryl groups such as a phenyl group, a tolyl group, a xylyl group, and a naphthyl group; aralkyl groups such as a benzyl group, a phenylethyl group, and a phenylpropyl group; groups obtained by substituting part or the whole of the hydrogen atoms of these hydrocarbon groups with halogen atoms such as chlorine, fluorine and bromine atoms, or cyan groups, such as halogenated hydrocarbon groups such as a chloromethyl group, a trifluoropropyl group, a chlorophenyl group, a bromophenyl group, a dibromophenyl group, a tetrachlorophenyl group, a fluorophenyl group, and a difluorophenyl group, and such as cyanoalkyl groups such as an α-cyanoethyl group, a β-cyanopropyl group, and a γ-cyanopropyl groups. Among these, alkyl groups and aryl groups are preferable, and a methyl group and a phenyl group are more preferable.

a and b are positive numbers satisfying 0≤a<3, 0<b<3, and 1<a+b<3, preferably numbers satisfying 0.0005≤a≤1, 1.5≤b<2.4, 1.5<a+b<2.5, and more preferably numbers satisfying 0.001≤a≤0.5, 1.8≤b≤2.1, 1.8<a+b≤2.2.

The molecular structure of component (C) is preferably a linear structure or a branched structure.

The viscosity of component (C) at 23°C is preferably 0.01 to 10 Pa·s, and more preferably 0.02 to 1.0 Pa·s.

When component (C) is included, the total amount of component (B) and component (C) is 1.5 to 35 parts by mass, preferably 1.5 to 30 parts by mass, and more preferably 1.5 to 28 parts by mass relative to 100 parts by mass of component (A). Component (B) and component (C) are formulated in such a way that the content ratio of component (C) in the total amount of component (B) and component (C) is 15 to 98% by mass, preferably 18 to 98% by mass, and more preferably 20 to 98% by mass.

The composition of the present invention can include, if necessary, a reaction inhibitor, a reinforcing silica, a flame retardancy-imparting agent, a heat resistance improver, a plasticizer, a colorant, an adhesion imparting agent, and a diluent, within the ranges not impairing the object of the present invention.

The compositions of the present invention are grease-like (paste-like) compositions. When as component (B), the alkoxysilane compounds (II-1, 2) with Y = Si(CH₃)₂CH₂ = CH₂ are used, by selecting the substituent of component (C) so as to include an unsaturated group, and by using the following component (D) and the following component(E) in combination, the hardness of the composition can be regulated between the gel-like composition and the rubber-like composition. Herein, when a rubber-like composition is prepared, the rubber-like composition involves compositions ranging from an elastic composition to a composition hard like a stone.

### [Component (D)]

Component (D) is a polyorganohydrogensiloxane, and is a component to be a cross-linking agent for component (C). The polyorganohydrogensiloxane of component (D) has, in a molecule thereof, two or more, and preferably three or more hydrogen atoms bonded to silicon atoms. Such hydrogen atoms may be bonded either to silicon atoms at molecular chain terminals or to silicon atoms midway the molecular chain, or alternatively may be bonded to both of the above. Moreover, a polyorganohydrogensiloxane having hydrogen atoms bonded only to the silicon atoms at both terminals can be used in combination. The molecular structure of component (D) may be any of a linear, branched, cyclic or three-dimensional network structure, and these structures may be used each alone or in combinations of two or more thereof. The polyorganohydrogensiloxane of component (D) is a heretofore known product, and for example, component (B) described in JP-A 2008-184549 can be used.

### [Component (E)]

Component (E) is a platinum-based catalyst, and a component to promote the curing after the kneading of component (C) and component (D). As component (E), heretofore known catalysts used for hydrosilylation reaction can be used. Examples of such catalysts include: platinum black, platinic chloride, chloroplatinic acid, a reaction product between chloroplatinic acid and a monohydric alcohol, complexes of chloroplatinic acid, olefins and vinylsiloxane, and platinum bisacetoacetate. The content of component (E) can be appropriately regulated according to the desired curing rate or the like, and is preferably 0.1 to 1000 ppm, in terms of the platinum element, relative to the total amount of component (C) and component (D).

The composition of the present invention can be obtained by mixing component (A) and component (B), and further, if necessary, other optional components by using a mixer such as a planetary mixer. During the mixing, the mixing may be performed while heating in a range from 50 to 150°C, if necessary. Moreover, for uniform finish, a kneading operation is preferably performed under high shear force. As a kneading apparatus, for example, a triple roll mill, a colloid mill, and a sand grinder are available, and among these, the triple roll mill offers a preferable method.

When the composition of the present invention is a gel-like composition including component (D) and component (E), the composition can be obtained in the same manner as in the method for producing a heat dissipating material described in JP-A 2008-184549.

The heat dissipating material made of the composition of the present invention is a heat dissipating material made of an above-described thermally conductive composition. When the heat dissipating material made of the composition of the present invention is a grease-like material not including component (D) and component (E), the viscosity (the viscosity obtained by the measurement method described in Examples) preferably falls within a range from 10 to 1000 Pa·s, from the viewpoint of easiness in application to a heat-generating portion.

When a heat dissipating material made of a composition in which, as described above, component (B) is the alkoxysilane compounds (II-1, 2) including Y = Si(CH₃)₂CH₂ = CH₂, is a rubber-like material including component (C), component (D) and component (E), the heat dissipating material preferably has a hardness of, for example, 5 or more as measured with a type E durometer (in accordance with JIS K6249).

The heat dissipating material made of the composition of the present invention has a thermal conductivity at 23°C, measured with a hot wire method, of 2.0 W/ (mK) or more, preferably 2.5 W/ (mK) or more, and more preferably 3.0 W/ (mK) or more. In order to enhance the heat dissipation effect by regulating the thermal conductivity, the proportion of component (A) in the composition is preferably 80% by mass or more; according to the required thermal conductivity, the proportion of component (A) can be increased.

The heat dissipating material of the present invention can be used as the heat dissipating material for PCs/servers mounting CPUs being large in heat generation amount, and additionally, as the heat dissipating materials for power modules, VLSIs, various electronic devices mounting optical components (optical pickups and LEDs), household appliances (DVD/HDD recorders (players), AV appliances such as FPDs), PC peripheral devices, home video game machines, automobiles, and industrial devices such as inverters and switched-mode power supplies. The heat dissipating material is allowed to have, for example, a grease-like form (paste-like form), a gel-like form and a rubber-like form.

Hereinafter, various embodiments of the present invention are described.

<1> A thermally conductive composition including (A) a spherical thermally conductive filler and (B) an alkoxysilane compound represented by the general formula (II-1) or the general formula (II-2) 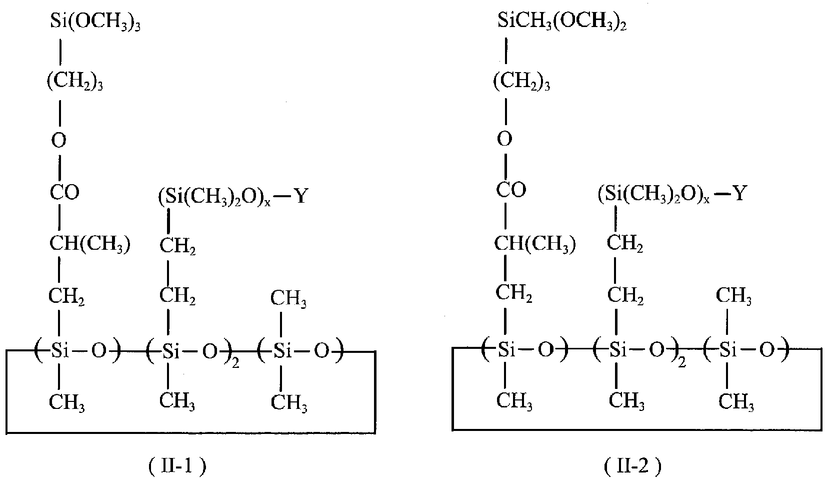 wherein
   x = 10 to 500, and
   Y = Si(CH₃)₂CH=CH₂ or Si(CH₃)₃,
   wherein the spherical thermally conductive filler of component (A) is a mixture formulated with specific ratios of fillers having different average particle sizes,
   the mixture being formulated with a spherical thermally conductive filler made of a nitride and having an average particle size of 50 µm to 80 µm in an amount of 50 to 70% by mass; and being formulated with a spherical thermally conductive filler having an average particle size of less than 1µm in an amount of 10% to 30% by mass, and preferably 15% to 30 % by mass, and being formulated with a spherical thermally conductive filler having an average particle size of 1 µm or more and less than 50 µm as a balance, wherein the average particle sizes are the median diameters d₅₀ as measured by the Coulter counter method.
<2> The thermally conductive composition according to <1>, wherein the mixture of component (A) is formulated with a spherical thermally conductive filler made of a nitride and having an average particle size of 50 to 80 µm, in an amount of 50 to 60% by mass.
<3> The thermally conductive composition according to <1> or <2>, wherein the mixture of component (A) is formulated with a spherical thermally conductive filler having an average particle size of less than 1 µm, in an amount of 15 to 25% by mass.
<4> The thermally conductive composition according to any one of <1> to <3>, wherein the balance is formulated with a spherical thermally conductive filler having an average particle size of 1 to 10 µm, and preferably an average particle size of 1 to 5 µm.
<5> The thermally conductive composition according to any one of <1> to <4>, including component (B), the alkoxysilane compound, in an amount of 1 to 20 parts by mass, preferably 1 to 15 parts by mass, and more preferably 3 to 15 parts by mass, relative to 100 parts by mass of component (A).
<6> The thermally conductive composition according to any one of <1> to <5>, wherein the spherical thermally conductive filler having an average particle size of less than 1 µm is aluminum oxide or zinc oxide.
<7> The thermally conductive composition according to any one of <1> to <6>, wherein the nitride is aluminum nitride or boron nitride.
<8> A heat dissipating material made of the thermally conductive composition according to any one of <1> to <7>.
<9> The composition or the heat dissipating material of any one of <1> to <8>, further including, as component (C), the polyorganosiloxane represented by the average compositional formula (I).
<10> The composition or the heat dissipating material of <9>, further including a polyorganohydrogensiloxane as component (D) and a platinum-based catalyst as component (E).

### Examples

### <Components Used>

### Component (A)

Roundish aluminum nitride "FAN-f80," average particle size: 80 µm, Tokuyama Corporation
Roundish aluminum nitride "FAN-f50-J," average particle size: 50 µm, Tokuyama Corporation
Roundish aluminum nitride "HF-05," average particle size: 5 µm, Tokuyama Corporation
Roundish aluminum nitride "HF-01," average particle size: 1 µm, Tokuyama Corporation
Roundish alumina "Sumicorandom," average particle size: 0.4 µm, Sumitomo Chemical Co., Ltd.

### Component (B)

The surface treatment agent (in the general formula (II-1), x:20, Y:Si(CH₃)₂CH = CH₂)

### <Measurement Methods>

### [Average Particle Size]

The average particle size (median diameter d₅₀) was measured by the Coulter counter method.

### [Viscosity]

In accordance with JIS K6249. The viscosity with a rotary viscometer rotor No.7, at a number of rotations of 20 rpm, and a measurement time of 1 minute is shown.

### [Thermal Conductivity]

The thermal conductivity was measured at 23°C, according to a hot wire method, by using a thermal conductivity meter (QTM-500, manufactured by Kyoto Electronics Manufacturing Co., Ltd.).

### Reference Examples 1 to 18 (not according to the invention as claimed)

Components (A) and (B) shown in Table 1 or Table 2 were placed in a planetary mixer (manufactured by Dalton Corporation), stirred and mixed at room temperature for 1 hour, and further stirred and mixed at 120°C for 1 hour, to obtain a thermally conductive composition. The amount of component (B) is given in terms of parts by mass relative to 100 parts by mass of component (A). The viscosity and the thermal conductivity of each of the compositions were measured. The results thus obtained are shown in Table 1 and Table 2.

**[Table 1]**

| | | Reference Examples | | | | | | | | |
|---|---|---|---|---|---|---|---|---|---|---|
| | | 1* | 2* | 3* | 4* | 5* | 6* | 7* | 8* | 9* |
| (A) | AlN ( 1µm) | 20 | 20 | 20 | 20 | 20 | 20 | 20 | 20 | 20 |
| | AlN (5 µm) | 20 | 20 | 20 | 20 | 20 | 20 | 20 | 20 | 20 |
| | AlN (50 µm) | 60 | 60 | 60 | 60 | 60 | 60 | 60 | 60 | 60 |
| | Total (% by mass) | 100 | 100 | 100 | 100 | 100 | 100 | 100 | 100 | 100 |
| (B) | Alkoxysilane (parts by | 19.84 | 16.02 | 12.75 | 10.00 | 9.92 | 7.44 | 6.98 | 6.53 | 6.31 |
| Viscosity (Pa·s) | | 6.6 | 13.4 | 33.4 | 87.0 | 89.0 | 214.0 | 250.0 | Paste | Shape forming limit |
| Thermal conductivity [W/(m·K)] | | 2.37 | 3.00 | 3.84 | 5.18 | 5.14 | 7.27 | 7.72 | 8.02 | 8.24 |

| | | | | | | | | | | |
|---|---|---|---|---|---|---|---|---|---|---|
| *: not according to the invention as claimed | | | | | | | | | | |

**[Table 2]**

| | | Reference Examples | | | | | | | | |
|---|---|---|---|---|---|---|---|---|---|---|
| | | 10* | 11* | 12* | 13* | 14* | 15* | 16* | 17* | 18* |
| (A) | AlN ( 1µm) | 19 | 19 | | | 19 | 20 | 20 | 20 | 19 |
| | AlN (5 µm) | 24 | 24 | 30 | 30 | 24 | 20 | 20 | 20 | 24 |
| | AlN (50 µm) | 57 | 57 | 55 | 55 | 57 | 60 | 60 | 60 | 57 |
| | Total (% by mass) | 100 | 100 | 100 | 100 | 100 | 100 | 100 | 100 | 100 |
| (B) | Alkoxysilane (parts by mass) | 12.9 | 12.9 | 8.89 | 7.43 | 7.43 | 7.43 | 6.97 | 6.73 | 6.53 |
| Viscosity (Pa·s) | | 59.6 | 55.0 | 155.0 | 288.0 | 312.0 | 352.0 | Paste | Paste | Shape forming limit |
| Thermal conductivity [W/(m·K)] | | 4.78 | 4.78 | 6.67 | 8.15 | 8.25 | 8.49 | 8.63 | 9.05 | 9.29 |

| | | | | | | | | | | |
|---|---|---|---|---|---|---|---|---|---|---|
| *: not according to the invention as claimed | | | | | | | | | | |

As can be seen from a comparison between Table 1 and Table 2, the compositions of Reference Examples 1 to 9 including aluminum nitride having an average particle size of 50 µm and the compositions of Reference Examples 10 to 18 including aluminum nitride having an average particle size of 80 µm show that Reference Examples 1 to 9 are smaller in viscosity, and Reference Examples 10 to 18 are higher in thermal conductivity. It is to be noted that "shape forming limit" in Table 1 and Table 2 means that molding can be made, and any portion being unable to be molded and remaining in a powder state is not contained. It is also to be noted that "paste" means a paste (grease) state that made the measurement of the viscosity impossible.

### Examples 19 to 22

Components (A) and (B) shown in Table 3 were placed in a planetary mixer (manufactured by Dalton Corporation), stirred and mixed at room temperature for 1 hour, and further stirred and mixed at 120°C for 1 hour, to obtain a thermally conductive composition. The amount of component (B) is given in terms of parts by mass relative to 100 parts by mass of component (A). The viscosity and the thermal conductivity of each of the compositions were measured by the above-described methods. The results thus obtained are shown in Table 3.

**[Table 3]**

| | | Examples | | | |
|---|---|---|---|---|---|
| | | 19 | 20 | 21 | 22 |
| (A) | Al₂O₃ (0.4 µm) | 19 | 22 | 22 | 22 |
| | AlN (5 µm) | 24 | 23 | 23 | 23 |
| | AlN (80 µm) | 57 | 55 | 55 | 55 |
| | Total (% by mass) | 100 | 100 | 100 | 100 |
| (B) | Alkoxysilane (parts by mass) | 12.8 | 12.2 | 7.13 | 5.45 |
| Viscosity (Pa·s) | | 46.4 | 52.4 | 176.0 | Shape forming limit |
| Thermal conductivity [W/(m·K)] | | 4.56 | 4.86 | 8.77 | 10.88 |

As can be seen from a comparison between Table 3 and Table 2, the thermal conductivity was able to be enhanced while the increase of the viscosity was being suppressed, by including in component (A) the alumina having an average particle size of less than 1 µm in an amount of 10% by mass or more. It is to be noted that "shape forming limit" in Table 3 means the same as described above.

### Comparative Examples 1 to 16

Components (A) and (B) shown in Table 4, Table 5, or Table 6 were placed in a planetary mixer (manufactured by Dalton Corporation), stirred and mixed at room temperature for 1 hour, and further stirred and mixed at 120°C for 1 hour, to obtain a thermally conductive composition for comparison. The amount of component (B) is given in terms of parts by mass relative to 100 parts by mass of component (A). The viscosity and the thermal conductivity of each of the compositions were measured. The results thus obtained are shown in Table 4 to Table 6. It is to be noted that "shape forming limit" in each of Table 5 and Table 6 means the same as described above.

**[Table 4]**

| | | Comparative Examples | | | |
|---|---|---|---|---|---|
| | | 1 | 2 | 3 | 4 |
| (A) | AlN (1 µm) | 100 | | | |
| | AlN (5 µm) | | 100 | | |
| | AlN (50 µm) | | | 100 | |
| | AlN (80 µm) | | | | 100 |
| | Total (% by mass) | 100 | 100 | 100 | 100 |
| (B) | Alkoxysilane (parts by mass) | 24.34 | 24.34 | 24.34 | 24.34 |
| Viscosity (Pa·s) | | 200.0 | 14.0 | 4.1 | 9.2 |
| Thermal conductivity [W/(m·K) | | 1.61 | 1.66 | 1.65 | 2.48 |

**[Table 5]**

| | | Comparative Examples | | | | | |
|---|---|---|---|---|---|---|---|
| | | 5 | 6 | 7 | 8 | 9 | 10 |
| (A) | AlN (1 µm) | 40 | 40 | 40 | 40 | 40 | 40 |
| | AlN (5 µm) | 60 | 60 | 60 | 60 | 60 | 60 |
| | Total (% by mass) | 100 | 100 | 100 | 100 | 100 | 100 |
| (B) | Alkoxysilane (parts by mass) | 29.75 | 24.34 | 19.84 | 16.02 | 15.33 | 14.00 |
| Viscosity (Pa·s) | | 7.0 | 13.6 | 39.0 | 168.0 | 272.0 | Shape forming limit |
| Thermal conductivity [W/(m·K) | | 1.25 | 1.52 | 1.80 | 2.28 | 2.39 | 2.47 |

**[Table 6]**

| | | Comparative Examples | | | | | |
|---|---|---|---|---|---|---|---|
| | | 11 | 12 | 13 | 14 | 15 | 16 |
| (A) | Al₂O₃ (0.4 µm) | 33 | 33 | 33 | 33 | 33 | 33 |
| | AlN (5 µm) | 67 | 67 | 67 | 67 | 67 | 67 |
| | Total (% by mass) | 100 | 100 | 100 | 100 | 100 | 100 |
| (B) | Alkoxysilane (parts by mass) | 18.6 | 15.1 | 12.0 | 9.82 | 9.68 | 8.58 |
| Viscosity (Pa·s) | | 6.45 | 12.3 | 40.4 | 444.0 | 704.0 | Shape forming limit |
| Thermal conductivity [W/(m·K) | | 1.60 | 2.24 | 2.68 | 3.52 | 3.77 | 4.21 |

From a comparison between Reference Examples and Examples in Table 1 to Table 3 and Comparative Examples 1 to 4 in Table 4, it was possible to verify that by allowing component (A) to be a mixture formulated with specific ratios of fillers having different average particle sizes, the viscosity and the thermal conductivity were able to be improved.

From a comparison between Reference Examples and Examples in Table 1 to Table 3 and Comparative Examples 5 to 16 in Table 5 and Table 6, it was possible to verify that by including an aluminum nitride having an average particle size of 50 µm or more, the viscosity and the thermal conductivity was able to be improved.

Reference Examples 1 and 2 in Table 1 and Comparative Examples 7 and 8 in Table 5 are the same in the amounts formulated of component (A) and component (B), respectively; however, Reference Examples 1 and 2 were lower in viscosity and larger in thermal conductivity.

### Industrial Applicability

The thermally conductive composition of the present invention can be used as heat dissipating materials for various devices having heat-generating portions such as electronic devices such as personal computers.

## Claims

1. A thermally conductive composition comprising (A) a spherical thermally conductive filler and (B) an alkoxysilane compound represented by the general formula (II-1) or the general formula (II-2) 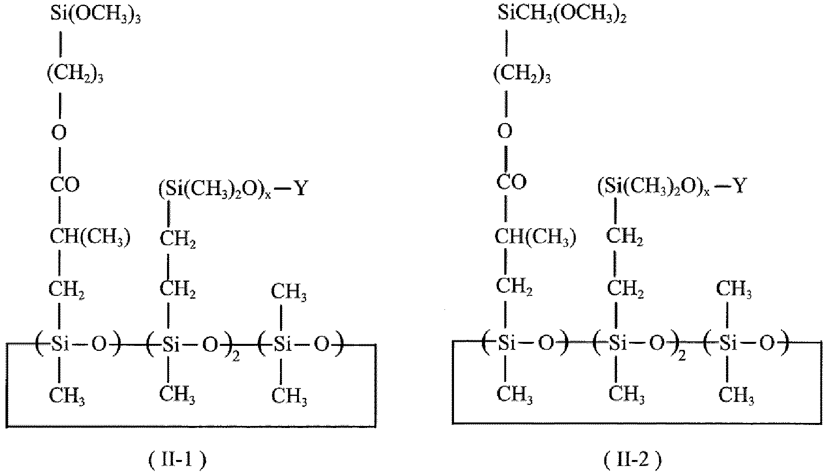 wherein
x = 10 to 500, and
Y = Si(CH₃)₂CH=CH₂ or Si(CH₃)₃,
wherein the spherical thermally conductive filler of component (A) is a mixture formulated with specific ratios of fillers having different average particle sizes,
the mixture being formulated with a spherical thermally conductive filler made of a nitride and having an average particle size of 50 µm to 80 µm in an amount of 50 to 70% by mass, and being formulated with a spherical thermally conductive filler having an average particle size of less than 1 µm in an amount of 10 to 30% by mass, and being formulated with a spherical thermally conductive filler having an average particle size of 1 µm or more and less than 50 µm as a balance, wherein the average particle sizes are the median diameters d₅₀ as measured by the Coulter counter method.

2. The thermally conductive composition according to claim 1, wherein the content of component (B) in the composition is 1 to 20 parts by mass, relative to 100 parts by mass of component (A).

3. The thermally conductive composition according to claim 1 or 2, wherein the nitride is aluminum nitride or boron nitride.

4. A heat dissipating material consisting of the thermally conductive composition according to any one of claims 1 to 3.

## Patentansprüche

1. Eine wärmeleitfähige Zusammensetzung, die (A) einen kugelförmigen wärmeleitfähigen Füllstoff und (B) eine Alkoxysilanverbindung, die durch die allgemeine Formel (II-1) oder die allgemeine Formel (II-2) 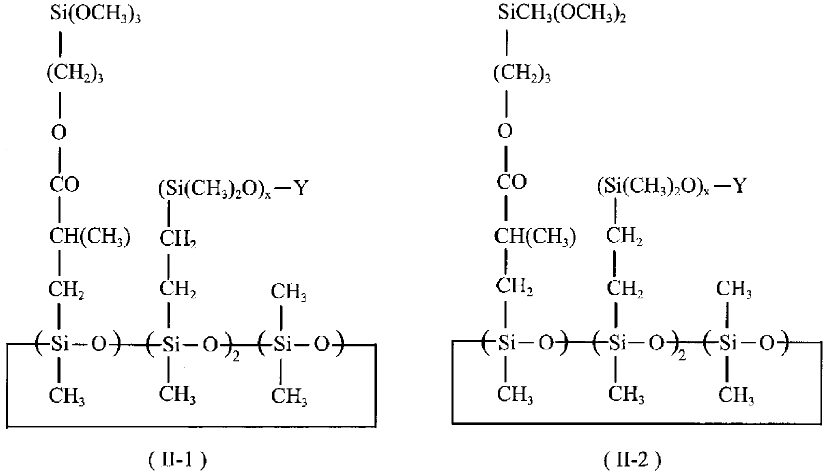 worin
x = 10 bis 500, und
Y = Si(CH₃)₂CH=CH₂ oder Si(CH₃)₃ ist, dargestellt wird, umfasst,
wobei der kugelförmige wärmeleitfähige Füllstoff der Komponente (A) eine Mischung ist, die mit spezifischen Anteilen von Füllstoffen mit unterschiedlichen durchschnittlichen Teilchengrößen formuliert ist,
wobei die Mischung mit einem kugelförmigen wärmeleitfähigen Füllstoff, der aus einem Nitrid hergestellt ist und eine durchschnittliche Teilchengröße von 50 µm bis 80 µm aufweist, in einer Menge von 50 bis 70 Gewichts-% formuliert ist, und mit einem kugelförmigen wärmeleitfähigen Füllstoff mit einer durchschnittlichen Teilchengröße von weniger als 1 µm in einer Menge von 10 bis 30 Gewichts-% formuliert ist, und mit einem kugelförmigen wärmeleitenden Füllstoff mit einer durchschnittlichen Teilchengröße von 1 µm oder mehr und weniger als 50 µm als Rest formuliert ist, wobei die durchschnittlichen Teilchengrößen die mittleren Durchmesser d₅₀ sind, wie sie durch das Coulter-Zähler-Verfahren gemessen werden.

2. Die wärmeleitfähige Zusammensetzung gemäß Anspruch 1, wobei der Gehalt der Komponente (B) in der Zusammensetzung 1 bis 20 Gewichtsteile, bezogen auf 100 Gewichtsteile der Komponente (A), beträgt.

3. Die wärmeleitfähige Zusammensetzung gemäß Anspruch 1 oder 2, wobei das Nitrid Aluminiumnitrid oder Bornitrid ist.

4. Ein wärmeableitendes Material, bestehend aus der wärmeleitfähigen Zusammensetzung gemäß einem der Ansprüche 1 bis 3.

## Revendications

1. Composition thermoconductrice comprenant (A) une charge sphérique thermoconductrice et (B) un composé alcoxysilane représenté par la formule générale (II-1) ou la formule générale (II-2) 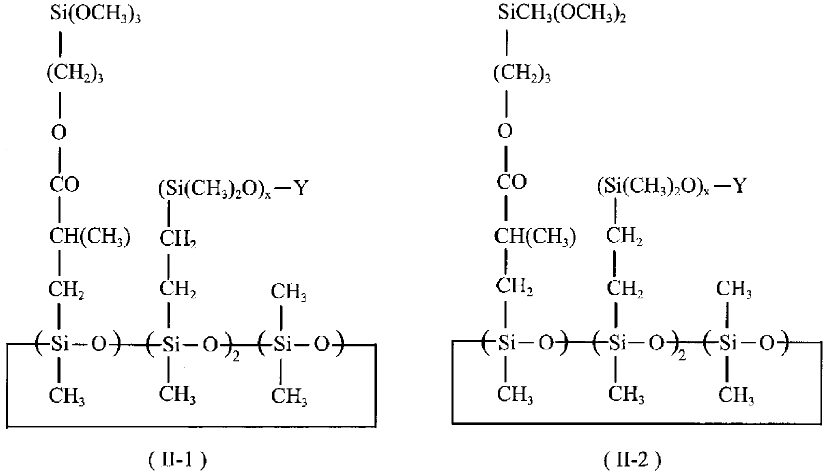 où
x = 10 à 500, et
Si(CH₃)₂CH=CH₂ ou Si(CH₃)₃,
dans laquelle la charge sphérique thermoconductrice du composant (A) est un mélange formulé avec des proportions spécifiques de charges ayant des tailles moyennes de particules différentes,
le mélange étant formulé avec une charge sphérique thermoconductrice constituée d'un nitrure et ayant une taille moyenne de particules de 50 µm à 80 µm dans une proportion de 50 à 70 % en masse, et étant formulé avec une charge sphérique thermoconductrice ayant une taille moyenne de particules de moins de 1 µm dans une proportion de 10 à 30 % en masse, et étant formulé avec une charge sphérique thermoconductrice ayant une taille moyenne de particules de 1 µm ou plus et de moins de 50 µm en complément, les tailles moyennes de particules étant les diamètres médians d₅₀ mesurés par la méthode du compteur de Coulter.

2. La composition thermoconductrice selon la revendication 1, dans laquelle la teneur en composant (B) dans la composition est de 1 à 20 parties en masse, par rapport à 100 parties en masse de composant (A).

3. La composition thermoconductrice selon la revendication 1 ou 2, dans laquelle le nitrure est le nitrure d'aluminium ou le nitrure de bore.

4. Un matériau dissipateur de chaleur constitué de la composition thermoconductrice selon l'une des revendications 1 à 3.
